# EUROPÄISCHE PATENTSCHRIFT

(11) **EP 3 824 137 B1**
(45) Veröffentlichungstag und Bekanntmachung des Hinweises auf die Patenterteilung: **12.11.2025**
(21) Anmeldenummer: 19724380.1
(22) Anmeldetag: 08.05.2019
(51) Int. Cl.: D21D 1/30, D21D 1/34

(54) **VORRICHTUNG UND VERFAHREN ZUR BEHANDLUNG VON FASERN**
DEVICE AND METHOD FOR HANDLING FIBRES
DISPOSITIF ET PROCÉDÉ DE TRAITEMENT DE FIBRES

(30) Priorität: 18.07.2018 AT 506282018
(43) Veröffentlichungstag der Anmeldung: 26.05.2021
(73) Patentinhaber: JAROLIM, Michael, 4673 Gaspoltshofen (AT)
(72) Erfinder: JAROLIM, Michael, 4673 Gaspoltshofen (AT)
(74) Vertreter: TBK
(86) Internationale Anmeldenummer: PCT/EP2019/061775
(87) Internationale Veröffentlichungsnummer: WO 2020/015883

(56) Entgegenhaltungen:
- EP-A1- 0 575 803
- EP-A2- 0 731 210
- EP-A2- 0 877 117
- DE-A1- 1 943 524
- US-A- 2 718 821
- US-A1- 2006 192 040

## Beschreibung

Die Erfindung betrifft eine Vorrichtung und ein Verfahren zur Behandlung von Fasern, insbesondere Zellstoff, eines Fasern bzw. Zellstoff beinhaltenden Stoffgemischs, wobei nur eine Teilfläche einer zweiten Mahloberfläche eines bewegbaren Behandlungskörpers relativ zu einer ersten Mahloberfläche stoffgemischbeaufschlagt wird.

Fasern für die Textil- und insbesondere Papierindustrie müssen im Allgemeinen für den späteren Einsatz behandelt bzw. bearbeitet werden, damit das daraus hergestellte Produkt wie z.B. Papier die gewünschten Eigenschaften hinsichtlich Festigkeit, Oberflächengüte, Bedruckbarkeit und dergleichen aufweisen kann.

Am häufigsten sind in der Papierindustrie Mahlverfahren mittels Mahlaggregaten, insbesondere Refinern, anzutreffen. Dem Fachmann sind hierbei eine Vielzahl von möglichen Anordnungen von Mahloberflächen bekannt, zwischen denen eine Behandlung der Fasern eines Stoffgemischs bzw. Stoffmittels erfolgt. Die Mahloberflächen sind in der Regel mit einzelnen Zähnen, Stegen, Zahnreihen oder dergleichen bestückt, zwischen denen Rillen, Nuten oder dergleichen ausgebildet sind. Derartige messerbesetzte Mahloberflächen oder auch die Mahlwerkzeuge werden häufig als (Mahl- )Garnituren bezeichnet.

Üblicherweise wird das Stoffgemisch bei der Behandlung zwischen die Mahloberflächen eingepresst und in einer Bearbeitungs- oder Behandlungszone bearbeitet. Je nach Anordnung der Mahlwerkzeuge bzw. Mahloberflächen wird die Bearbeitungszone zwischen einer einseitig rotierenden Mahloberfläche (z.B. Rotor-Stator Anordnung eines Einscheibenrefiners) oder zwischen gegeneinander rotierenden Mahloberflächen (z.B. Doppelscheibenrefiner) bearbeitet. Auch andere Refiner, wie etwa Trommel- oder Kegelrefiner funktionieren nach diesem Prinzip. Auch bei ähnlichen Verfahren, wie etwa dem Dispergieren, werden Mahl-, Bearbeitungs- oder Behandlungsflächen mit einem Fasern beinhaltenden Stoffgemisch beaufschlagt.

Die Behandlung bzw. Bearbeitung der Fasern erfolgt dabei durch Druckimpulse zwischen den Fortsätzen, wie etwas Messern, Kanten usw., der jeweiligen Mahloberflächen. Ob die Fasern bei der Bearbeitung mehr geschnitten (Rösche Mahlung) oder mehr fibrilliert (Schmierige Mahlung) werden, hängt von einigen, dem Fachmann bekannten Parametern ab. Als Parameter können neben der Geometrie der Mahlwerkzeuge, der Einstellung des Mahlspalts bzw. der Behandlungszone, der spezifischen Kantenbelastung nach Brecht-Siewert, der eingesetzten Stoffdichte auch andere Faktoren eine Auswirkung auf die Mahlintensität des eingesetzten Stoffgemischs bzw. der bearbeiteten Fasern haben.

Um eine wirtschaftliche Mahlung oder Disperierung bei gleichzeitig hohem Durchsatz an Stoffgemisch zu gewährleisten, sind bislang lediglich Anordnungen bekannt, in welchen die Mahlflächen und teilweise auch daran angrenzende Nebenflächen in direktem Stoffgemischkontakt stehen. Dies bedeutet am Beispiel eines Doppelscheibenrefiners, wie beispielsweise in der DE10066175B4 offenbart, oder auch eines Trommelrefiners, wie beispielsweise in der EP2659061B1 offenbart, dass eine sehr hohe Energiemenge zur Bewegung der rotierenden Mahloberflächen aufgewendet werden muss. Überdies erfordern die meisten bekannten Anordnungen ein Druckgehäuse um die Zufuhr von zu bearbeitendem Stoffgemisch in die Behandlungszone zu gewährleisten. In anderen Worten ist es erforderlich die gesamte bewegte Mahloberfläche beider am Behandlungsprozess eingesetzten Mahlwerkzeuge mit dem Stoffgemisch zu beaufschlagen. In den meisten Fällen sind überdies auch noch andere bewegte Teile, wie etwa Wellen, stoffgemischbeaufschlagt, wodurch ebenso ein Teil der eingesetzten Energiemenge nicht zur eigentlichen Behandlung der Fasern herangezogen werden kann. Überdies müssen bekannte Anordnungen oftmals mit aufwändigen Dichtlösungen ausgestatten sein um eine kontrollierbare Zufuhr und/oder Abfuhr des Stoffgemischs zu gewährleisten. Ferner sind bekannte Vorrichtungen oftmals sehr kompliziert aufgebaut und verursachen relativ hohe Kosten für Wartungs- und Instandhaltungsarbeiten, da die eingesetzten Garnituren bzw. Mahlwerkzeuge verschleißen und immer einen Stillstand für Wartungsarbeiten erfordern.

Dem Fachmann sind auch andere Refiner Bauarten unter dem Begriff des "Holländer Refiners" bekannt, wobei eine nicht-druckbeaufschlagte trommelförmige Mahloberfläche in eine Fasern beinhaltende Suspension eingetaucht wird. Ein kontinuierlicher Betrieb ist jedoch nicht möglich, wodurch der Durchsatz an bearbeitetem Stoffgemisch sehr gering bleibt.

Die Druckschrift EP 0 731 210 A2 wird als nächstliegender Stand der Technik angesehen. Sie offenbart die Merkmale des Oberbegriffs des Anspruchs 1.

Die Druckschrift US 2 718 821 A offenbart zur Steuerung einer Mahlintensität eine spiralförmige Anordnung von Messereihen auf einer Mahloberfläche. Die Mahlkanten sind somit nicht geschlossen.

Aufgabe der vorliegenden Erfindung ist es, die Nachteile des Standes der Technik zu überwinden und eine Vorrichtung und ein Verfahren zur Verfügung zu stellen, mittels derer ein Benutzer in der Lage ist, eine einfache, kostengünstige, prozesssichere und insbesondere energieeffiziente Behandlung bzw. Bearbeitung eines Fasern beinhaltenden Stoffgemischs vorzunehmen. Eine weitere Aufgabe der Erfindung liegt darin, den Gesamtenergieaufwand und insbesondere die Leerlaufleistung bei Betrieb der Vorrichtung möglichst gering zu halten. Überdies soll mit der vorliegenden Erfindung eine Vorrichtung und ein Verfahren vorgestellt werden, welches mittels lediglich geringfügiger Anpassungen für die Behandlung unterschiedlicher Stoffdichten geeignet ist und unter anderem die Wartungsarbeiten wesentlich verkürzen bzw. verbilligen.

Diese Aufgabe wird durch eine Vorrichtung nach Anspruch 1 und ein Verfahren nach Anspruch 11 gelöst. Vorteilhafte Ausgestaltungen sind Gegenstand der abhängigen Ansprüche.

Die erfindungsgemäße Vorrichtung, insbesondere Refiner, zur Behandlung von Fasern eines Fasern beinhaltenden Stoffgemischs, umfasst zumindest ein Austrittselement zum Durchlass des faserhaltigen Stoffgemischs mit einer Austrittsöffnung und zumindest einer die Austrittsöffnung in eine Umfangsrichtung umgebend angeordneten ersten Mahloberfläche und zumindest eine Zustellvorrichtung zur Positionierung des Austrittselements. Zur Behandlung des Fasern beinhaltenden Stoffgemischs ist ein bewegbarer Behandlungskörper mit einer zweiten Mahloberfläche relativ zum zumindest einen Austrittselement gegenüberliegend angeordnet, wobei bei Durchlass des Fasern beinhaltenden Stoffgemisches durch das Austrittselement eine spaltförmige Behandlungszone zwischen der ersten Mahloberfläche des Austrittselements und einer stoffgemischbeaufschlagten Teilfläche der zweiten Mahloberfläche des bewegbaren Behandlungskörpers ausgebildet ist.

Beim entsprechend erfindungsgemäßen Verfahren werden zumindest die Verfahrensschritte:
- Bereitstellung eines Stoffgemischs, welches zumindest ein eine Flüssigkomponente, bevorzugt Wasser, und Fasern, bevorzugt Zellstoff umfasst;
- Bewegen eines bewegbaren Behandlungskörpers relativ zum zumindest einen Austrittselement mit einer vorgebbaren Relativgeschwindigkeit;
- Durchpressen des Fasern beinhaltenden Stoffgemischs durch das zumindest eine Austrittselement mit einem vorgebbaren Prozessdruck;
- Behandlung des Stoffgemischs durch Ausbilden einer spaltförmigen Behandlungszone zur Behandlung von Fasern zwischen einer ersten Mahloberfläche des zumindest einen Austrittselements und einer stoffgemischbeaufschlagten Teilfläche einer zweiten Mahloberfläche des bewegbaren Behandlungskörpers durch Positionieren des Austrittselements relativ zum bewegbaren Behandlungskörper; angewandt.

Durch die Relativbewegung der zweiten Mahloberfläche des Behandlungskörpers relativ zum Austrittselement bzw. zur ersten Mahloberfläche, werden in der spaltförmig ausgebildeten Behandlungszone die Fasern des Stoffgemischs behandelt bzw. bearbeitet. Unter Behandlung wird im Kontext der vorliegenden Erfindung das Fibrillieren und/oder Kürzen und/oder Erhöhen der Bindefähigkeit von Fasern und/oder Disperieren, bis hin zur Herstellung von Nanofasern, verstanden. Auf diese Weise kann die Mahl- oder Mahlungsintensität eingestellt werden. Dabei kann die Intensität der Faserbehandlung durch den Arbeitsabstand bzw. Mahlspalt und/oder die Relativgeschwindigkeit der wirksamen Mahloberflächen bzw. Mahlgarnituren zueinander und/oder das Design der Mahlgarnituren relativ gut eingestellt werden.

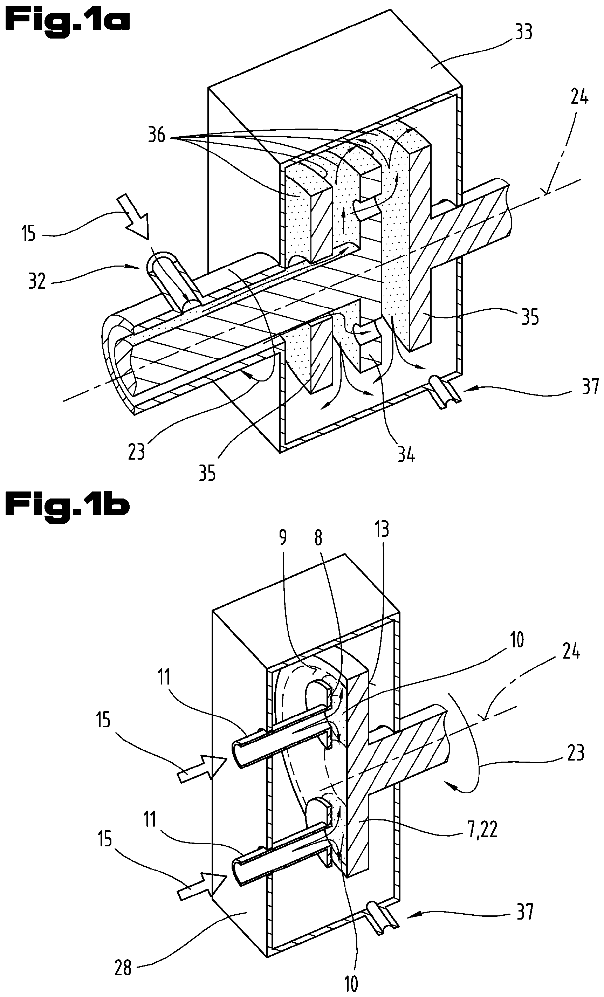

Ein wesentlicher Vorteil, liegt in der energieeffizienten Anordnung der teilweise bekannten Komponenten, insbesondere in der Beaufschlagung lediglich einer Teilfläche der zweiten, am bewegbaren Behandlungskörper angeordneten, Mahloberfläche. Durch die Beaufschlagung von, im Vergleich zu bekannten Anordnungen, relativ geringen Teilen der zweiten Mahloberfläche bzw. des bewegten Mahlwerkzeugs kann eine signifikante Reduktion der Leerlaufleistung erreicht werden. Somit kann der Gesamtenergieaufwand zum Betrieb, insbesondere Antrieb des Behandlungskörpers, der Vorrichtung gegenüber eine "vollflächig" stoffgemischbeaufschlagter Mahloberflächen deutlich reduziert werden. Für eine weitere Erläuterung wird auf die beispielhaften, schematischen Darstellungen von Fig.1a im Vergleich zu den erfindungsgemäßen Ausführungsbeispielen und deren Diskussion verwiesen.

Weiters wird eine sehr schonende Behandlung der Fasern dadurch ermöglicht, dass hohe Drehzahlen des bewegbaren Behandlungskörpers bzw. Relativgeschwindigkeiten zwischen erster und zweiter Mahloberfläche eingestellt werden können, wodurch die eingebrachte Mahlenergie im Vergleich zum Gesamtenergieaufwand relativ hoch ist.

Die erfindungsgemäße Vorrichtung ist zur Behandlung einer Vielzahl von organischen und/oder synthetischen Fasern, jedoch bevorzugt Zellstoff oder Zellulose, geeignet. Die Zufuhr des Stoffgemischs kann dabei über zumindest eine Versorgungseinrichtung zum Bereitstellen des faserhaltigen Stoffgemischs am Austrittselement mit einem vorgebbaren Prozessdruck erfolgen. Der vorgebbare Prozessdruck erzeugt einen kontinuierlichen Durchfluss des Stoffgemischs in der Behandlungszone und kann zur Variation einer Geschwindigkeitsänderung des Stoffgemischs in der Behandlungszone verwendet werden.

Die vorgestellte Vorrichtung erlaubt außerdem, dass lange und/oder nicht ausreichend zerkleinerte bzw. bearbeitete Fasern und/oder anderes Störmaterial durch die Relativbewegung des Behandlungskörpers aus der Behandlungszone abgeführt werden und ein Verstopfen der Vorrichtung verhindert werden kann. Somit können eine relativ hohe Menge an Stoffgemisch bearbeitet und auch die Homogenität des bearbeiteten Stoffgemischs erhöht werden. Ebenso wird die Prozesssicherheit erhöht.

Ferner können die verwendeten Mahloberflächen relativ einfach auf die Erfordernisse des zu bearbeitenden Stoffgemischs angepasst werden, wodurch mittels der erfindungsgemäßen Vorrichtung bzw. dem Verfahren sowohl eine Funktion als Disperger oder als Refiner mit dem gleichen Wirkprinzip realisiert werden kann. Es ist daher möglich sehr unterschiedliche Stoffdichten von 0.1 bis 35 Vol.%, und teilweise auch bis zu 50 Vol.%, zu bearbeiten, während bei herkömmlichen Dispergern oder Refinern Stoffdichten von 2 bis 35 Vol.% üblich sind. Einer der Gründe hierfür ist, dass die Abfuhr des Stoffgemischs in der Behandlungszone nicht so stark von der Nutgeometrie der beiden korrespondierenden Mahloberflächen abhängt, sondern wesentlich durch die Relativbewegung der zweiten Mahloberfläche zur ersten Mahloberfläche unterstützt wird. Für sehr hohe Stoffdichten kann die Ausbildung der Versorgungseinrichtung als herkömmliche Fluidpumpe unter Umständen nicht ausreichend sein und alternativ z.B. eine Förderschnecke oder dergleichen vorteilhaft sein.

Die erste und/oder zweite, oder weitere, Mahloberfläche/n können Zähne, Messer, oder gleichartig wirkende Fortsätze aufweisen, welche bei der Ausbildung der erfindungsgemäßen Vorrichtung als Disperger im Betrieb zusammenwirkend ineinandergreifen, während sie bei der Ausbildung als Refiner bevorzugt als Messerreihen aneinander vorbei bewegt werden.

Die erfindungsgemäße Vorrichtung kann überdies relativ einfach und kostengünstig hergestellt und betrieben werden, da komplizierte Bestandteile entfallen. Etwaige Verschleißteile sind relativ einfach zugänglich und günstig zu ersetzen, wodurch die Einsatzzeiten signifikant erhöht werden können. Außerdem kann das zumindest eine Austrittselement unter Umständen sogar während des Betriebs der Vorrichtung gewechselt bzw. ausgetauscht werden.

Da das bearbeitete Stoffgemisch beim Austritt aus der Behandlungszone sehr stark beschleunigt wird, kann es auf einfache Weise in einem, zumindest Teile des Behandlungskörpers und/oder des Austrittselements umgebenden, Gehäuse aufgefangen werden. Somit ist ein beträchtlicher Teil des Behandlungskörpers nicht in direktem Kontakt mit dem Stoffgemisch. Der Behandlungskörper lässt sich daher widerstandsarm bewegen, wodurch die gesamte Leistungsaufnahme signifikant um den Betrag der eingesparten Leerlaufleistung reduziert werden kann. Dies impliziert weiters, dass kein Druckgehäuse zur Zu-/Abfuhr des Stoffgemischs verwendet werden muss, sondern ein einfach gestaltetes Gehäuse für den Stofffang ausreicht.

Des Weiteren kann es zweckmäßig sein, wenn der bewegbare Behandlungskörper in eine Bewegungsrichtung im Wesentlichen seitlich, bevorzugt normal, zu einer Austrittselementachse des Austrittselements mittels einer Antriebsvorrichtung antreibbar ausgebildet ist.

**Dies entspricht einer "aktiven"** und somit regelbaren Bewegung des bewegbaren Behandlungskörpers in die Bewegungsrichtung. Die Austrittselementachse entspricht im Wesentlichen einer gedachten Längsachse durch das Austrittselement im Zentrum der Austrittsöffnung. Die Bewegung erfolgt dabei im Wesentlichen seitlich, bevorzugt normal, zur Austrittselementachse des Austrittselements und kann mittels der Antriebsvorrichtung eingeleitet und geregelt werden. Auf diese Weise können die Relativgeschwindigkeit und somit die Höhe der Mahlintensität in der Behandlungszone relativ einfach eingestellt werden.

Wie zuvor erläutert kann über die Drehzahl des Behandlungskörpers bzw. der Relativgeschwindigkeit der zweiten Mahloberfläche die sogenannte Kantenbelastung bei den Mahloberflächen, also den Mahlwerkzeugen oder Mahlgarnituren, und damit der Grad der Kürzung der Fasern während der Mahlung effektiv beeinflusst werden. Die spezifische Kantenbelastung nach Brecht und Siewert stellt eine weithin bekannte Messung für die Mahlintensität dar. Die spezifische Kantenbelastung ist somit als Intensitätskenngröße zu verstehen, welche die eingetragene Energiemenge über eine bestimmte Messer-/Kanten-/Rillenlänge in das Stoffgemisch angibt. Die Mahlintensität ergibt sich aus dem Quotient aus reiner Mahlleistung und der sekündlichen Kantenlänge in J/m. Die reine Mahlleistung entspricht der Differenz aus der gesamten Mahlleistung und der Pumpleistung bzw. Leerlaufleistung.

Je höher die Kantenbelastung ist, umso stärker werden die Fasern gekürzt, während eine geringere Kantenbelastung einen verstärkt fibrillierenden Effekt hat. Über eine Erhöhung der Drehzahl kann die Kantenbelastung gesenkt und umgekehrt durch eine Verminderung der Drehzahl gesteigert werden. Somit kann eine vorgebbare Qualität der bearbeiteten Fasern erfindungsgemäß relativ einfach eingestellt werden. Als Antriebsvorrichtung sind demnach jede Art motorischer Art, wie etwa Elektro- oder Hydraulikmotoren, denkbar.

Ferner kann vorgesehen sein, dass der bewegbare Behandlungskörper rotationssymmetrisch, etwa als eine Scheibe, Zylinder, Kegel, oder als bandförmig, wie etwa eine Kette oder Band, ausgebildet ist.

Die Auswahl der Geometrie des Behandlungskörpers kann vom Fachmann in Anbetracht der verfügbaren Platzverhältnisse, Fördermengen, Antriebsleistung und dergleichen vorgenommen werden. In gewissen Fällen können daher bandförmige Behandlungskörper von Vorteil sein, welche ebenfalls nur teilflächig mit Stoffgemisch beaufschlagt werden. Die rotationssymmetrischen Behandlungskörper erlauben ebenso eine relativ simple, aufgabengemäße Konstruktion und können zudem sehr formstabil ausgebildet sein ohne einen überhöhten Energieaufwand für die Bewegung in Kauf nehmen zu müssen, da jeweils nur eine stoffbeaufschlagte Teilfläche vom Stoffgemisch bespritzt wird.

Besonders vorteilhaft ist auch eine Ausprägung, gemäß welcher vorgesehen sein kann, dass der bewegbare Behandlungskörper als Scheibe seitlich, bevorzugt normal, zum Austrittselement rotierbar ausgebildet ist.

Bei der Ausführung als Scheibe oder Platte können die Vorteile einer günstigen Beschaffung, hoher Lebensdauer und geringem Wartungsaufwand besonders gut genützt werden. Überdies können derartige Scheiben über geeignete Aufnahmen für separat anzuordnende Mahloberflächen verfügen, wodurch lediglich die verschlissene Mahloberfläche im Bedarfsfall getauscht werden muss.

Darüber hinaus kann vorgesehen sein, dass die zumindest eine Zustellvorrichtung parallel zu einer Rotationsachse der Scheibe, zur Einstellung eines vorgebbaren Radialabstandes der Austrittselementachse von der Rotationsachse, beweglich ausgebildet ist.

Diese Ausführungsform erlaubt eine eigenständige oder auch zusätzliche Möglichkeit zur Regelung der Relativgeschwindigkeit in der Behandlungszone, welche durch die unterschiedlichen Umfangsgeschwindigkeiten in Abhängigkeit vom Radialabstand zur Rotationsachse relativ einfach einstellbar ist. Diese Maßnahme kann ergänzend oder auch anstatt einer Drehzahlregelung der Antriebseinrichtung vorgesehen sein und eine weitere wirkungsvolle Methode zur Einstellung der Mahlintensität bietet.

Gemäß einer Weiterbildung ist es möglich, dass zumindest die erste Mahloberfläche zumindest eine, bevorzugt mehr als zwei, Messerreihe/n aufweist.

Zur Ausführung der vorliegenden Erfindung ist zumindest eine "messerbewährte", oder Kanten aufweisende, erste Mahloberfläche erforderlich. Die zweite Mahloberfläche kann unter Umständen lediglich eine Vielzahl von Zähnen aufweisen um die Druckstöße auf die Fasern des Stoffgemischs bei der Behandlung bzw. Bearbeitung aufzubringen. Es hat sich jedoch gezeigt, dass eine besonders gute Behandlung, insbesondere Mahlung, erzielt werden kann, wenn beide Mahloberflächen eine Mehrzahl von Messerreihen aufweisen, wie dies bei einer als Refiner ausgebildeten Vorrichtung vorzugsweise der Fall ist.

Ferner kann es zweckmäßig sein, wenn die zumindest eine Messerreihe der ersten Mahloberfläche eine geschlossene Mahlkante aufweist.

Durch die geschlossenen Mahlkanten kann eine Behandlung der zu behandelnden Fasern dahingehend verbessert werden, da ein auf diese Weise der unbehandelte Austritt des Stoffgemischs durch etwaige Nuten, Kanäle oder Rillen besser kontrollierbar oder sogar völlig vermeidbar wird. Dieses Erzwingen von Druckstößen und/oder Mahlkantenkontakten kann wesentlich zur Erhöhung der Mahleffizienz, also der Erhöhung der Wahrscheinlichkeit die Fasern zu bearbeiten, beitragen. Ebenso kann durch diese Maßnahme die Prozessstabilität und Qualität der bearbeiteten Fasern erhöht werden.

Darüber hinaus kann vorgesehen sein, dass die erste Mahloberfläche eine in Bewegungsrichtung größere Längserstreckung aufweist als in eine Querrichtung und/oder entgegen der Bewegungsrichtung.

Durch die Optimierung der Form der ersten Mahloberfläche kann eine Homogenisierung des Stoffgemischaustritts entlang des Umfangs der ersten Mahloberfläche bewirkt werden. Auf diese Weise kann außerdem die Homogenität und/oder Qualität des bearbeiteten Stoffgemischs verbessert werden, da die Mahlintensität über die wirksame erste Mahloberfläche in alle Richtungen verbessert, oder sogar im Wesentlichen gleich, werden kann.

Des Weiteren kann vorgesehen sein, dass die zumindest eine, bevorzugt mehr als zwei, Messerreihe/n der ersten Mahloberfläche konzentrisch zur Austrittsöffnung angeordnet sind.

Durch diese Maßnahme kann ein unkontrollierter Stoffgemischaustritt durch Nuten, Rillen oder Kanäle effizient reduziert, oder sogar vermieden werden. Die Messerreihen können dabei bevorzugt eine geschlossene Kantenlinie aufweisen, wodurch dieser Effekt weiter erhöht werden kann. Dieses Erzwingen von Druckstößen und/oder Mahlkantenkontakten kann wesentlich zur Erhöhung der Mahleffizienz beitragen.

Gemäß einer besonderen Ausprägung ist es möglich, dass die erste Mahloberfläche zur stoffgemischbeaufschlagten Teilfläche der zweiten Mahloberfläche des bewegbaren Behandlungskörpers im Wesentlichen formkomplementär ausgebildet ist.

Insbesondere bei gewölbten Innen- oder Außenflächen des Behandlungskörpers, wie etwa bei einem Zylinder oder einem Kegel, kann diese Maßnahme die Homogenität des Stoffgemischaustritts aus der Behandlungszone, welche zur unebenen stoffgemischbeaufschlagten Teilfläche ausgebildet wird, erhöhen. Dies kann entscheidend dazu beitragen die lokalen Austrittsgeschwindigkeiten und/oder die Mahlintensität auf die zu bearbeitenden Fasern in der Behandlungszone über die erste Mahloberfläche zu homogenisieren, was zur Erhöhung der Qualität beiträgt.

Entsprechend einer vorteilhaften Weiterbildung kann vorgesehen sein, dass ein Endabschnitt zumindest eines Austrittselements zumindest teilweise um die Austrittselementachse rotierbar, bevorzugt antreibbar rotierbar, ausgebildet ist.

Mithilfe eines rotierbar gelagerten Austrittselements, kann beispielsweise über eine geeignete **Ausbildung der ersten Mahloberfläche eine "passive" Rotation der** ersten Mahloberfläche beim Durchlass des Stoffgemischs bewirkt werden. Besonders vorteilhaft wird jedoch die Ausbildung eines separat antreibbaren, also rotierbaren, Endabschnitts angesehen. In beiden Fällen kann der Verschleiß der ersten Mahloberfläche, welcher sich vornehmlich in Bewegungsrichtung des bewegbaren Behandlungskörpers ausbildet, durch eine "aktiv" vorgebbare Rotation schrittweise, oder auch fortlaufend, kompensiert werden. Hierdurch kann eine gleichmäßige Abnutzung bzw. Verschleiß der ersten Mahloberfläche erzielt werden, wodurch die Lebens- bzw. Einsatzdauer erhöht werden kann. Überdies kann dies zur Verbesserung einer kontinuierlich gleichbleibenden Qualität des bearbeiteten Stoffgemischs genutzt werden.

Insbesondere kann es vorteilhaft sein, wenn die zumindest eine Zustellvorrichtung zur Einstellung eines Arbeitsabstandes zwischen der ersten Mahloberfläche des zumindest einen Austrittselements und der stoffgemischbeaufschlagten Teilfläche der zweiten Mahloberfläche des bewegbaren Behandlungskörpers ausrichtbar ausgebildet ist.

Dies kann eigenständig oder auch in Kombination mit anderen Maßnahmen, wie etwa der Einstellung der Relativgeschwindigkeit und/oder des Prozessdrucks des Stoffgemischs und/oder der Einstellung eines Radialabstandes im Falle eines scheibenförmigen Behandlungskörpers erfolgen.

Es kann dabei besonders vorteilhaft sein, die Relativgeschwindigkeit des bewegten Behandlungskörpers, zur Einstellung von in der spaltförmigen Behandlungszone ausgebildeten Mahlintensität, zu regeln. Ebenso kann es vorteilhaft sein, dass der Arbeitsabstand bzw. Mahlspalt zwischen dem zumindest einen Austrittselement und der korrespondierenden stoffgemischbeaufschlagten Teilfläche zur Einstellung von vorgebbaren Druckkräften auf den bewegten Behandlungskörper mittels zumindest der Zustellvorrichtung geregelt wird. Die erste Mahloberfläche ist mit der zweiten Mahloberfläche dabei nicht in direktem Kontakt. Die Druckkräfte, also ein Anpressdruck, können die gezielte Einstellung des Arbeitsabstandes und somit einer definierten Behandlungszone bewirken, da durch den lokalen Stoffgemischdurchfluss mit dem vorgebbaren Prozessdruck ein **"Aufschwimmen"** und unter Umständen die Ausbildung einer unkontrollierten Behandlungszone erfolgen könnte. Somit kann somit die Austrittsgeschwindigkeit des bearbeiteten Stoffgemischs beeinflusst werden, wodurch die Mahlintensität in der spaltförmigen Behandlungszone gezielt eingestellt werden kann.

Ferner kann vorgesehen sein, dass zumindest zwei Austrittselemente symmetrisch in Umfangsrichtung und/oder Radialrichtung relativ zum bewegbaren Behandlungskörper angeordnet sind.

Durch die Anordnung mehrerer Austrittselemente, welche mit einem gemeinsamen Behandlungskörper jeweils eine Behandlungszone ausbilden lässt sich der Durchsatz an Stoffgemisch deutlich erhöhen. Dies ist insbesondere vorteilhaft, da sich im laufenden Betrieb bedarfsgemäß, eine oder mehrere Austrittselemente re**lativ einfach "zu-/abschalten" lassen** und sogar Wartungsarbeiten einzelner Austrittselemente möglich sind. Außerdem kann diese Maßnahme dazu genützt werden, etwaige Biegemomente, welche durch den Prozessdruck und/oder die Anpressdrücke auf den Behandlungskörper aufgebracht werden, zu verringern oder sogar vollständig zu kompensieren. Die erlaubt eine stabilere und wartungsärmere Vorrichtung.

Darüber hinaus kann vorgesehen sein, dass zumindest ein zweites Austrittselement einem ersten Austrittselement im Wesentlichen gegenüberliegend angeordnet ist, wobei das erste Austrittselement einer zweiten Mahloberfläche des bewegbaren Behandlungskörpers und das jeweils korrespondierende zweite Austrittselement einer, der zweiten Mahloberfläche gegenüberliegenden, dritten Mahloberfläche zugeordnet ist.

Durch die Ausbildung mehrerer Austrittselemente, welche mit dem gemeinsamen Behandlungskörper jeweils eine Behandlungszone ausbilden lässt sich der Durchsatz an Stoffgemisch ebenso deutlich erhöhen. Durch die gegenüberliegende Anordnung zweier korrespondierender Austrittelemente kann eine Reduktion der Biegemomente, bis hin zu einer vollständigen Kompensation der Biegemomente, auf z.B. die Antriebsachse des Behandlungskörpers oder auch den Behandlungskörper selber, bewirkt werden. Diese Maßnahme kann sowohl bei bandförmigen Behandlungskörpern, wie auch bei rotationssymmetrischen Behandlungskörpern, wie etwa einem Zylinder oder einer Scheibe, von Vorteil sein, sofern sich die stoffgemischbeaufschlagten Teilflächen der korrespondierenden Austrittselemente im Wesentlichen an der zweiten und dritten Mahloberfläche gegenüberliegen.

Ebenso kann vorgesehen sein, dass entlang der Bewegungsrichtung und/oder im Wesentlichen normal zur Bewegungsrichtung des bewegbaren Behandlungskörpers zumindest zwei Austrittselemente angeordnet sind.

Es ist hierbei ebenso denkbar, dass die Austrittselemente in zumindest eine Richtung gestaffelt, also zueinander versetzt, angeordnet sind. Die Anordnung mehrerer Austrittselemente erlaubt eine höhere Produktivität unter Verwendung lediglich eines gemeinsamen Behandlungskörpers. Dieser Vorteil ist analog zur Ausbildung der oben genannten, einander an zweiten und dritten Mahloberflächen gegenüberliegend angeordneten, Austrittselementen vor allem darin zu sehen, dass die Leistungsaufnahme zum Antrieb des bewegbaren Behandlungskörpers nur geringfügig ansteigt oder sogar vernachlässigbar ist. Hierdurch kann sehr energieeffizient und kostengünstig eine große Menge an Stoffgemisch gleichzeitig bearbeitet werden. Es ist somit leicht vorstellbar, dass mehrere Austrittselemente entlang eines Zylinders oder auch Kegels angeordnet sein können. Dabei können die Austrittselemente grundsätzlich auch an der zweiten Mahloberfläche, also beispielsweise einer Außenfläche des Zylinders, einander gegenüberliegend angeordnet sein, wodurch eine Kompensation der Biegemomente auf die Antriebsachse des Behandlungskörpers bewirkt werden kann. Ebenso ist denkbar, die Austrittselemente in Umfangsrichtung einer Scheibe anzuordnen, was den gleichen Effekt auf die Scheibe bewirkt.

Eine Erhöhung der Anzahl der Austrittselemente kann in jedem Fall eine wesentliche Erhöhung der stoffbeaufschlagten Teilflächen an der Gesamtoberfläche der zweiten und/oder dritten Mahloberfläche bewirken, welche erfindungsgemäß mit einer vergleichsweise niedrigen Erhöhung der Leerlaufleistung einhergeht.

Ferner können auch mehrere Austrittselemente einer gemeinsamen Verstellvorrichtung und/oder Versorgungseinrichtung zugeordnet sein, wodurch sich eine sehr günstige Bauweise ergibt.

Vorteilhaft ist auch eine Ausprägung, gemäß welcher vorgesehen sein kann, dass zumindest der bewegbare Behandlungskörper von der Antriebsvorrichtung mittels zumindest einem berührenden und/oder berührungslosen Dichtelement, bevorzugt einer wartungsfreien Labyrinthdichtung, von einem Gehäuse abgedichtet angeordnet ist.

Durch die relativ einfache Konstruktion der erfindungsgemäßen Vorrichtung kann auf aufwändige Dichtungslösungen verzichtet werden. Die Behandlung des Stoffgemischs erfolgt zwar unter Beaufschlagung mit einem Prozessdruck, allerdings ist das Stoffgemisch nach Austritt in der Regel lediglich atmosphärischen Bedingungen ausgesetzt. Zum Auffangen des bearbeiteten Stoffgemisches ist ein Gehäuse vorteilhaft, welches zumindest die stoffgemischbeaufschlagten Teilflächen, bevorzugt den gesamten Behandlungskörper, gegenüber der Umgebung abschirmt. Zur Abdichtung der Gehäuseöffnungen wie etwa den Austrittselementen oder einer Antriebswelle können z.B. einfache berührende Gummidichtungen verwendet werden, oder auch selbstdichtende, wartungsfreie Labyrinthdichtungen, wie sie dem Fachmann bekannt sind. Dies ermöglicht besonders lange Wartungsintervalle und geringe Herstellungskosten.

Es hat sich als vorteilhaft erwiesen, wenn dem Gehäuse ein Auffangbehälter zum Auffangen und/oder Weiterverarbeiten des bearbeiteten Stoffgemisches zugeordnet ist. In gewissen Fällen kann eine im Wesentlichen vollständige Abdichtung des Gehäuses vorteilhaft sein, um den Behandlungsraum unter Unter- oder Überdruck zu setzen oder auch eine Schutzgasatmosphäre darin auszubilden, wodurch sich die Qualität des bearbeiteten Stoffgemischs gezielt beeinflussen lässt.

Gemäß einer Weiterbildung ist es möglich, dass vor der Bereitstellung des Stoffgemischs eine chemische und/oder enzymatische und/oder mechanische Vorbehandlung, des Stoffgemischs vorgenommen wird.

Durch eine chemische und/oder enzymatische Vorbehandlung kann das Auftrennen der Faserbestandteile gezielt beeinflusst werden, wodurch die Behandlung bzw. Behandlung, insbesondere Zerkleinerung, der Fasern, erleichtert werden kann. Eine derartige Vorbehandlung kann in einer externen Vorrichtung erfolgen oder auch in einem dafür vorgesehenen Abschnitt der Versorgungseinrichtung. Ebenso ist eine mechanische Vorbehandlung zur Einstellung einer vorgebbaren Faserlänge bzw. Verteilung der Faserlängen und/oder -durchmesser denkbar. Derartige mechanische Vorbehandlungen, wie auch Sortieren, Sieben, etc. sind dem Fachmann hinlänglich bekannt. Somit kann eine geeignete Vorbehandlung zur Erhöhung der Qualität des bearbeiteten Stoffgemischs verwendet und in das erfindungsgemäße Verfahren integriert werden.

Ferner kann es zweckmäßig sein, wenn zumindest die Verfahrensschritte des Durchpressens und Bearbeitens mit zumindest Teilen des bearbeiteten Stoffgemischs wiederholt werden.

Durch mehrmalige Behandlung des Fasern beinhaltenden Stoffgemischs, kann die Qualität und Homogenität des bearbeiteten Stoffgemischs erhöht werden. Es ist dabei denkbar zumindest Teile, oder auch die gesamte Menge, des bearbeiteten Stoffgemischs eines Durchgangs der Vorrichtung erneut zuzuführen. Dabei kann ein Kreislaufsystem zwischen Auffangbehälter und Versorgungseinrichtung sehr einfach dazu genutzt werden, eine vorgebbare Faserdurchmesser- und/oder -längenverteilung zu erzielen. In gewissen Fällen kann es vorteilhaft sein, die Flüssigkeitskomponente des bearbeiteten und wieder für die erneute Zuführung vorgesehenen Stoffgemischs anzupassen, indem beispielsweise Wasser hinzugefügt wird. Hierdurch kann ein besonders feiner Aufschluss der Faserbestandteile bei verhältnismäßig geringem Energie- und/oder Druckaufwand erreicht werden.

Zur erfindungsgemäßen Vorrichtung bzw. dem Verfahren können ein oder mehrere Sensoren zur Detektion, Steuerung und Überwachung von zumindest Teilen der Vorrichtung und des Verfahrens genutzt werden. Derartige Sensoren sind dem Fachmann bekannt und werden daher nicht näher erläutert.

Zum besseren Verständnis der Erfindung wird diese anhand der nachfolgenden Figuren näher erläutert.

Es zeigen jeweils in stark vereinfachter, schematischer Darstellung:
- Fig. 1: schematische Schnittdarstellung durch eine Vorrichtung zu Behandlung von Fasern gemäß Stand der Technik (a) und Beispiel einer erfindungsgemäßen Anordnung (b);
- Fig. 2: schematische Querschnittsdarstellung durch ein Austrittselement und einen Behandlungskörper mit jeweiligen Mahloberflächen zur Erläuterung des Funktionsprinzips;
- Fig. 3: schematische Querschnittsdarstellung möglicher Ausführungsformen einer Vorrichtung mit zwei Austrittselementen welche in Umfangsrichtung an einer zweiten Mahloberfläche verteilt angeordneten (a) und an einer zweiten und dritten Mahloberfläche gegenüberliegend angeordnet sind (b);
- Fig. 4: schematische Querschnittsdarstellung möglicher Ausführungsformen von Behandlungskörpern als Zylinder (a), Kegel (b) bzw. Band (c) mit mehreren Austrittselementen;
- Fig. 5: schematische Darstellung möglicher Ausführungsformen von Austrittselementen mit einer ersten Mahloberfläche mit größerer Erstreckung in Bewegungsrichtung (a), oder konzentrisch angeordneten Messerreihen (b) in einer Untersicht, oder mit einer formkomplementären ersten Mahloberfläche (c) in einer Untersicht;
- Fig. 6: schematische Querschnittsdarstellung einer möglichen Ausführungsform eines Austrittselements mit rotierbarem Endabschnitt;
- Fig. 7: schematische Übersichtsdarstellung einer möglichen Anordnung einer Vorrichtung zur Behandlung von Fasern.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In Fig. 1a ist eine schematische Darstellung eines Doppelscheibenrefiners gemäß dem Stand der Technik dargestellt. Diese Darstellung dient zur Erläuterung des Funktionsprinzips herkömmlicher, bekannter Behandlungsvorrichtungen, bei welchen eine sehr hohe Energiemenge zur Bewegung der rotierenden Mahloberflächen bzw. Garnituren aufgewendet werden muss. In der gewählten Darstellung erfolgt die Zufuhr des Stoffgemischs 2 über eine Stoffgemischzufuhr 32 in ein Druckgehäuse 33. Der beweglich bzw. rotierbar angeordnete Rotor 34 bildet zu den beidseitigen Statoren 35 eine Behandlungszone 16 aus, welche sich über die gesamte Rotorfläche und die jeweiligen Statorflächen erstreckt. Die Bewegung des eingesetzten Stoffgemischs 2 ist schematisch durch Bewegungspfeile angedeutet. Die stoffgemischbeaufschlagten Oberflächen 36 sind zur besseren Veranschaulichung gepunktet dargestellt. Wie sehr einfach aus dieser Darstellung ersichtlich, ist es erforderlich die gesamte bewegte Oberfläche 36 beider am Behandlungsprozess eingesetzten Mahlwerkzeuge, also dem Rotor 34 und den Statoren 35, mit dem Stoffgemisch zu beaufschlagen. Die eingesetzten Mahlwerkzeuge sind in der Regel sehr aufwändig und teilweise kompliziert ausgebildet. Zudem ist auch die Welle des Rotors 34, sowie nicht am Behandlungsprozess wirksame Nebenflächen, wie etwa die Seiten- bzw. Außenflächen des Rotors und der Statoren vollständig mit dem Stoffgemisch 2, also auch mit dem Prozessdruck im Druckgehäuse 33 beaufschlagt. Dies bewirkt eine sehr hohe Leistungsaufnahme bzw. erforderliche Leerlaufleistung der bekannten Vorrichtung. Sinngemäß gilt dies ebenso für vollflächig stoffgemischbeaufschlagte Oberflächen von Refinern mit einer Trommel- oder Kegelanordnung, welche hier nicht dargestellt sind.

Nach der Behandlung bzw. Bearbeitung des Stoffgemischs 2 in einer bekannten Vorrichtung, wie in Fig. 1a gezeigt, erfolgt der Austritt des bearbeiteten Stoffgemischs bzw. der Fasern 5 durch eine Stoffgemischaustrittsöffnung 37. Bis zur Stoffgemischaustrittsöffnung 37 ist das Stoffgemisch 2 bzw. das bearbeitete Stoffgemisch 5 in der Regel dem Prozessdruck 15 ausgesetzt, weshalb nicht näher dargestellte, jedoch teilweise sehr aufwändige Dichtelemente 30 zur Abdichtung des Druckgehäuses 33 vorgesehen sein müssen.

Erfindungsgemäß erfolgt die Beaufschlagung eines Behandlungskörpers 7 mit einem Stoffgemisch 2 nur an stoffgemischbeaufschlagten Teilflächen 10 einer zweiten Mahloberfläche 9, wie beispielhaft in Fig. 1b dargestellt. Diese stoffgemischbeaufschlagten Teilflächen 10 der zweiten Mahloberfläche 9 entsprechen in ihrer Größe und/oder Form im Wesentlichen den korrespondierenden ersten Mahloberflächen 8. Wie aus Fig. 1b ersichtlich, ist zur Behandlung des Fasern 3 beinhaltenden Stoffgemischs 2 ein gemeinsamer bewegbarer Behandlungskörper 7 mit einer zweiten Mahloberfläche 9 relativ zum zumindest einen Austrittselement 11 gegenüberliegend angeordnet. Im gewählten Ausführungsbeispiel sind zwei Austrittselemente 11 von der Rotationsachse 24 des als Scheibe 22 ausgebildeten Behandlungskörpers 7 in Radialrichtung symmetrisch beabstandet angeordnet. Bei Durchlass des Fasern 3 beinhaltenden Stoffgemischs 2 durch die beiden Austrittselemente 11 wird jeweils eine spaltförmige Behandlungszone 16 zwischen der ersten Mahloberfläche 8 des Austrittselements 11 und der stoffgemischbeaufschlagten Teilfläche 10 der zweiten Mahloberfläche 9 des bewegbaren Behandlungskörpers 7 ausgebildet.

Durch den Vergleich von Fig. 1a und 1b kann relativ einfach der erfindungsgemäße Gedanke nachvollzogen werden, wobei erfindungsgemäß lediglich geringe Anteile der Gesamtoberfläche des Behandlungskörpers 7, also lediglich die Teilflächen 10 der zweiten Mahloberfläche 9 stoffgemischbeaufschlagt werden. Die strichliert eingefassten Kreissegmentoberflächen an der zweiten Mahloberfläche 9 deuten an, dass das bearbeitete Stoffgemisch bzw. die bearbeiteten Fasern 5 teilweise "mitgenommen" werden können. Dies bewirkt jedoch im Vergleich zum Stand der Technik nur einen vernachlässigbaren Anteil an der Leistungsaufnahme der Vorrichtung 1, da die Leerlaufleistung der erfindungsgemäßen Vorrichtung 1 nur einen geringen Teil des behandelten Stoffgemischs 5 auf der zweiten Mahloberfläche 9 beschleunigt, welcher durch Fliehkräfte ohnedies in Richtung des Gehäuses 28 abtransportiert wird.

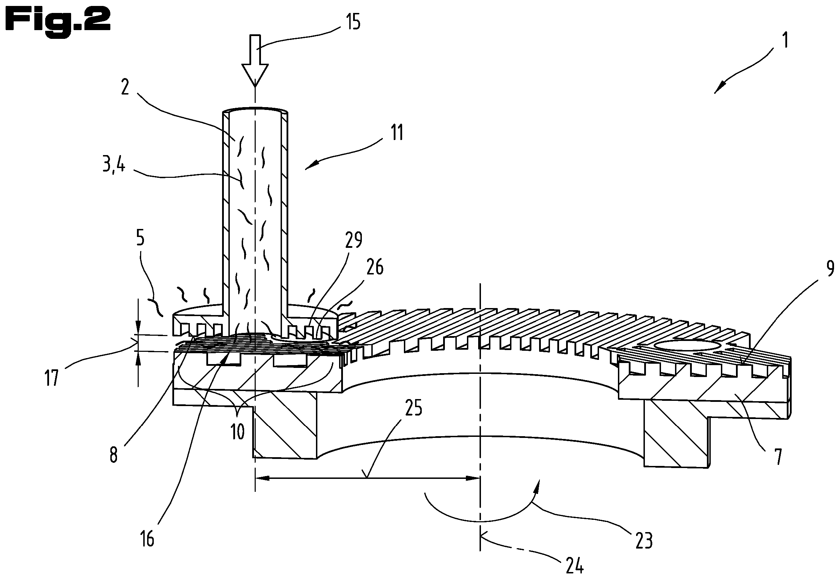

Das zumindest eine Austrittselement 11 zum Durchlass des faserhaltigen Stoffgemischs 2 weist jeweils eine Austrittsöffnung 12 und zumindest eine die Austrittsöffnung 12 in eine Umfangsrichtung umgebend angeordnete erste Mahloberfläche 8 auf. In der gewählten Darstellung des Funktionsprinzips wird der Einfachheit halber auf die Darstellung von etwaigen Zustellvorrichtungen 18, Versorgungseinrichtungen 19, Antriebsvorrichtungen 20 etc. in Fig. 1b verzichtet. Für die Beschreibung der Funktionsweise und möglicher Anordnungen der genannten Elemente wird auf die Diskussion der Fig. 2 bis Fig. 7 verwiesen.

Zur Verdeutlichung der Vorgänge bei der Behandlung der Fasern 3 in der Behandlungszone 16 sei auf die schematische Darstellung von Fig. 2 verwiesen. Der bewegbare Behandlungskörper 7 wird relativ zum zumindest einen Austrittselement 11 gegenüberliegend angeordnet, wodurch zwischen dem Austrittselement 11 bzw. der ersten Mahloberfläche 8 und der Stoffgemisch 2 beaufschlagten Teilfläche 10 der zweiten Mahloberfläche 9 des bewegbaren Behandlungskörpers 7 eine spaltförmige Behandlungszone 16 ausgebildet wird.

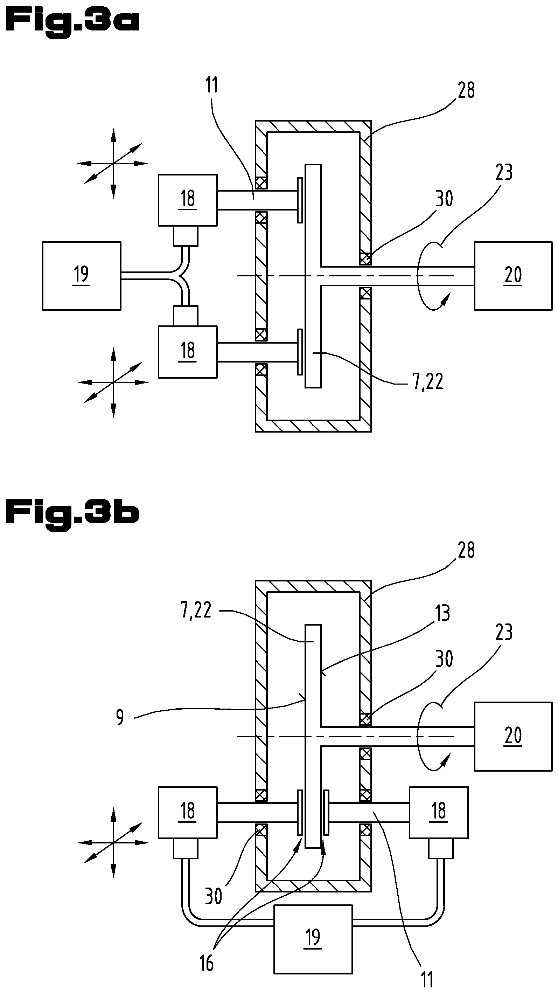

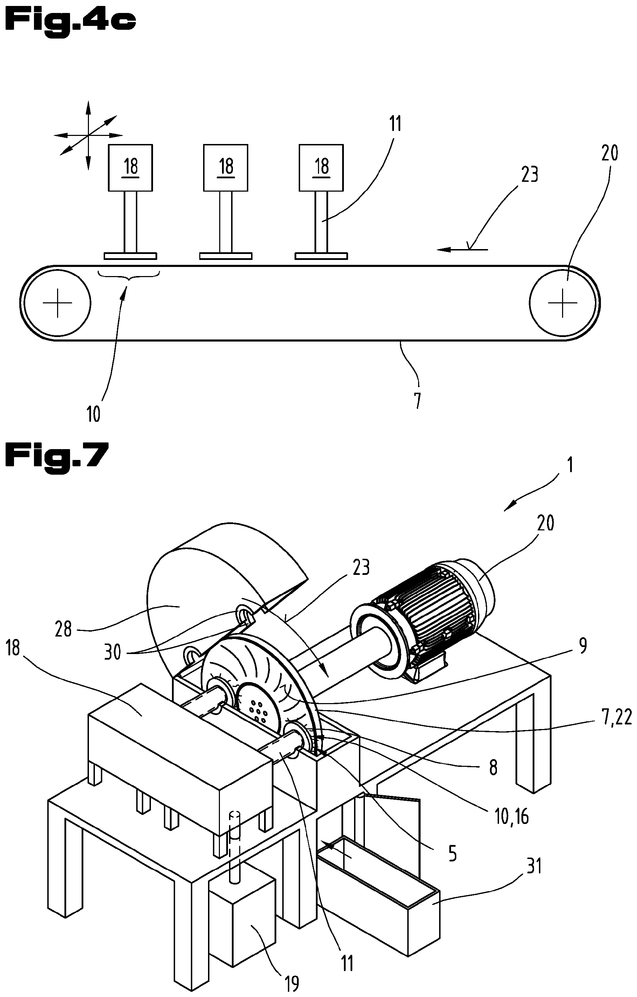

Wie in Fig. 2 schematisch dargestellt umfasst das Stoffgemisch 2 eine Flüssigkomponente sowie Fasern 3, welche insbesondere aus Zellstoff 4 oder Zellulose bestehen können. Das Stoffgemisch 2 wird mit einem vorgebbaren Prozessdruck 15 durch das Austrittselement 11 gepresst. Der bewegbare Behandlungskörper 7 kann dabei z.B. "passiv" durch den Austritt des bearbeiteten Stoffgemischs bzw. der behandelten Fasern 5 aus der Behandlungszone 16 in eine Bewegungsrichtung 23 in eine Relativbewegung versetzt werden. Ebenso kann der Behandlungskörper 7 "aktiv" durch eine, z.B. in Fig. 3 oder Fig. 7 dargestellte, Antriebsvorrichtung 20 in Bewegungsrichtung 23 bewegt werden. Bei Durchlass des Fasern 3 beinhaltenden Stoffgemischs 2 durch das Austrittselement 11 werden in der spaltförmig ausgebildeten Behandlungszone 16 die Fasern 3 vorrangig durch Druckstöße behandelt. Diese Druckstöße auf die Fasern 3 werden durch die Relativbewegung der ersten und zweiten Mahloberfläche 8,9, insbesondere durch die an den jeweiligen Mahloberflächen angeordneten Zähne, Messer, Messerreihen 26, oder ähnlicher gleichartig funktionierender Elemente, bewirkt.

Wie sehr gut aus Fig. 2 in Zusammenschau mit Fig. 1, sowie Fig. 4 bis Fig. 6 gesehen werden kann, wird die Relativbewegung des Behandlungskörpers 7 dazu genutzt das Verstopfen etwaiger Nuten 29 der ersten und/oder weiterer Mahloberflächen 8,9,13 zu vermeiden.

Die beispielhafte Ausführungsform in Fig. 1b stellt einen als Scheibe 22 ausgebildeten Behandlungskörper 7 dar. In diesem Fall ist der Behandlungskörper 7 um eine Rotationsachse 24 drehbar bzw. bewegbar gelagert. Das Austrittselement 11 weist eine Austrittselementachse 21 auf, welche im Wesentlichen einer gedachten Längsachse durch das Austrittselement 11 im Zentrum der Austrittsöffnung 12 entspricht. Wie aus Fig. 2 in Zusammenschau mit Fig. 1b und/oder Fig. 3 und Fig. 7 besonders gut ersichtlich, kann die Relativgeschwindigkeit 27 in der Behandlungszone 16 unter anderem durch den Radialabstand 25 zwischen Austrittselementachse 21 und Rotationsachse 24 eingestellt werden.

Aus der Zusammenschau von Fig. 2 mit Fig. 1b, Fig. 3 bis Fig. 7 kann ersehen werden, dass der bewegbare Behandlungskörper 7 in eine Bewegungsrichtung 23 am Austrittselement 11 vorbeigeführt wird. Diese Relativbewegung erfolgt bevorzugt im Wesentlichen seitlich, besonders bevorzugt normal zu einer Austrittselementachse 21.

Die Ausbildung einer Zustellvorrichtung 18 zur Positionierung des Austrittselements 11 ist beispielhaft in den Fig. 3, 4 und Fig. 7 dargestellt und sinngemäß auf die Fig. 1b, 2 und 5 übertragbar. Wie insbesondere aus den Fig. 3a und b ersichtlich, kann die Zustellvorrichtung 18 dazu verwendet werden, das zumindest eine Austrittselement 11 in Richtung des Behandlungskörpers 7 und/oder quer dazu zu bewegen. Eine derartige Zustellvorrichtung 18 kann insbesondere zur Einstellung des Arbeitsabstandes 17 verwendet werden.

In den Fig. 3a bis 3c sind Vorrichtungen 1 schematisch dargestellt, in welchen zwei oder mehrere Austrittselemente 11 relativ zu einem Behandlungskörper 7 angeordnet sind. Fig. 3a stellt dabei zwei Austrittselemente 11 dar, welche einer zweiten Mahloberfläche 8 des Behandlungskörpers 7 symmetrisch von der Rotationsachse 24 beabstandet sind. In Fig. 3b ist eine Situation schematisch dargestellt, wobei zwei Austrittselemente 11 im Wesentlichen gegenüberliegend und symmetrisch zueinander an einer zweiten Mahloberfläche 8, respektive einer dritten Mahloberfläche 9, des Behandlungskörpers 7 angeordnet sind. Durch die Ausbildung des Behandlungskörpers 7 als Scheibe 22 kann in den in Fig. 3a und b dargestellten Ausführungsformen eine Kompensation etwaiger Biegemomente an der Scheibe 22 und somit der Rotationsachse 24 kompensiert werden.

Die Versorgung des zumindest einen Austrittselements 11 kann jeweils über eine separate Versorgungseinrichtung 19 oder auch über eine gemeinsame Versorgungseinrichtung 19 zur Bereitstellung des Fasern 3 beinhaltenden Stoffgemischs 2 erreicht werden. Der Einfachheit halber wird auf eine Darstellung derartiger Versorgungseinrichtungen 19 in den Fig. 1, Fig. 2, Fig. 4 und Fig. 5 verzichtet.

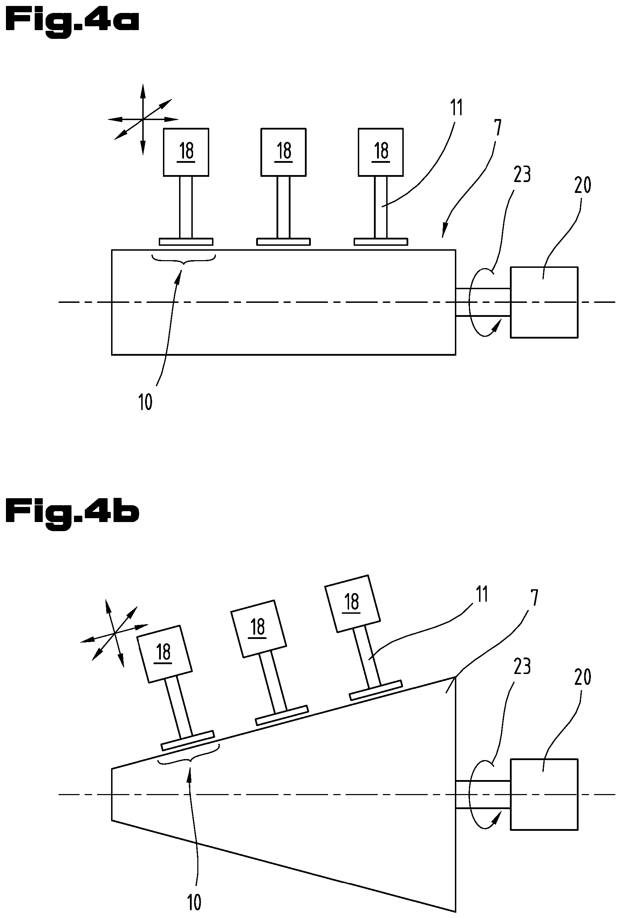

Der bewegbare Behandlungskörper 7 kann erfindungsgemäß als rotationssymmetrischer Körper, wie etwa ein Zylinder oder eine Trommel oder ein Kegel oder eine Scheibe 22 ausgeführt sein, wie beispielhaft in den Fig. 1b bis Fig. 3 und Fig. 4a, 4b oder Fig. 7 dargestellt. Alternativ dazu ist es möglich, den bewegbaren Behandlungskörper 7 bandförmig, etwa als Kette oder Band, auszubilden, wie aus Fig. 4c schematisch ersichtlich. Insbesondere aus Fig. 3 und 4 kann ersehen werden, dass mehrere Austrittselemente 11 einem gemeinsam benutzten Behandlungskörper 7 zugeordnet sein können. Der bewegbare Behandlungskörper 7 kann dabei mit einer Antriebsvorrichtung 20 verbunden sein, wie aus Fig. 3, 4 und 7 ersichtlich. Eine derartige Antriebsvorrichtung 20 kann beispielsweise als Hydraulik- oder Pneumatikmotor und besonders bevorzugt Elektromotor ausgebildet sein und über eine Drehzahlregelung verfügen.

Die in Fig. 3, 4 und 7 schematisch dargestellte Zustellvorrichtung 18 kann zur Einstellung eines Arbeitsabstandes 17 zwischen dem zumindest einen Austrittselement 11 und der Stoffgemisch 2 beaufschlagten Teilfläche 10 der zweiten bzw. dritten Mahloberfläche 9,13 des bewegbaren Behandlungskörpers 7 ausrichtbar bzw. positionierbar ausgebildet sind. Mittels einer derartigen Zustellvorrichtung 18 kann auch ggf. der Radialabstand 25 eines Austrittselements 11 von der Rotationsachse 24 eines als Scheibe 22 ausgebildeten Behandlungskörpers 7 eingestellt werden, wie in Zusammenschau mit Fig. 1b, Fig. 2 und Fig. 7 besonders gut ersichtlich. Ebenso ist vorstellbar, dass mittels einer gemeinsamen Zustellvorrichtung 18 mehrere Austrittselemente 11 gemeinsam relativ zum Behandlungskörper 7 positioniert werden können. Ferner kann aus Fig. 3 und 4 ersehen werden, dass zumindest zwei Austrittselemente 11 in Umfangsrichtung und/oder Radialrichtung und/oder Längsrichtung relativ zum bewegbaren Behandlungskörper 7 angeordnet sein können. Die Austrittselemente 11 können dabei symmetrisch und/oder zueinander versetzt an einer zweiten Mahloberfläche 8 und/oder dritten Mahloberfläche 9 angeordnet sein.

Nicht dargestellt ist eine besondere Ausführungsform an Zylindern, Kegeln, Bändern oder Ketten, in welcher zumindest ein zweites Austrittselements 11 einem ersten Austrittselement 11 im Wesentlichen gegenüberliegend angeordnet ist, wobei das erste Austrittselement 11 bzw. die erste Mahloberfläche 8 einer zweiten Mahloberfläche 9 des bewegbaren Behandlungskörpers 7 und das korrespondierende, zweite Austrittselement 11 an einer der zweiten Mahloberfläche 9 gegenüberliegenden dritten Mahloberfläche 13 angeordnet ist. Diese Situation ist für einen als Scheibe 22 ausgebildeten Behandlungskörper 7 aus Fig. 3b ersichtlich und kann vom Fachmann auf andere rotationssymmetrische und/oder bandförmige Behandlungskörper 7 extrapoliert werden.

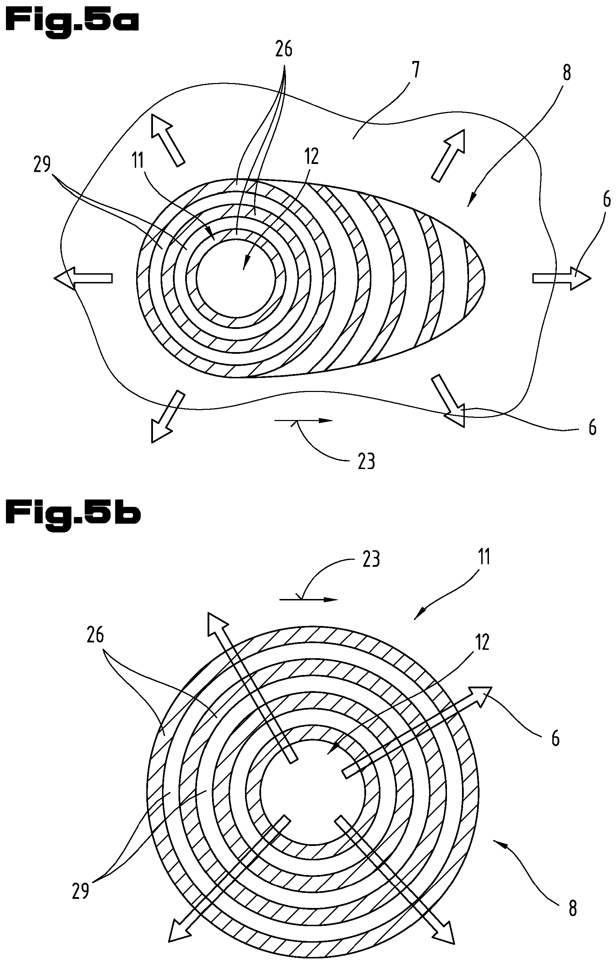

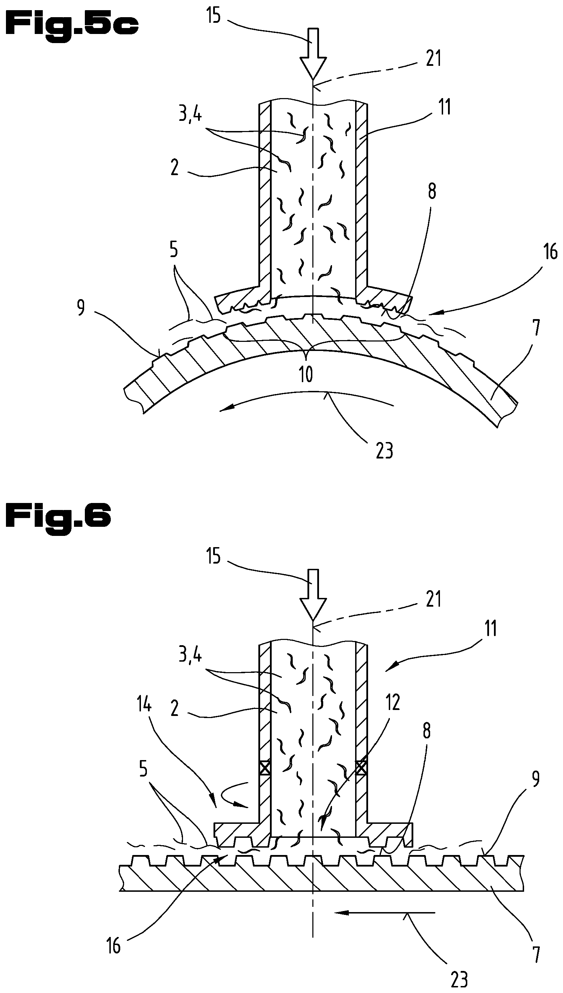

In Fig. 5a bis c und Fig. 6 sind mehrere Austrittselemente 11 in verschiedenen möglichen Ausführungsformen dargestellt.

Fig. 5a zeigt dabei schematisch eine Untersicht eines Austrittselements 11 mit einer ersten Mahloberfläche 8, welche in Bewegungsrichtung 23 eine größere Längserstreckung aufweist als schräg und/oder quer dazu. Die Anordnung von Messern, Zacken, oder anderer Fortsätze an der ersten Mahloberfläche 8 kann vom Fachmann je nach der gewünschten Anwendung, wie etwa als Disperger oder Refiner, ausgewählt werden. Analog dazu gilt dies auch für die zweite und/oder dritte Mahloberfläche 9,13, welche nicht separat dargestellt sind. Das dargestellte Ausführungsbeispiel zeigt mehrere die Austrittsöffnung 12 umgebende, und nach außen hin verteilte, Messerreihen 26 welche durch Nuten 29 voneinander beabstandet sind. Bei Verwendung derartiger erster Mahloberflächen 8, kann deren Form vom Fachmann auf die jeweilige Anwendung und Geometrie des Behandlungskörpers 7 hin optimiert werden. Die Behandlungszone 16 sollte wie zuvor erläutert im Wesentlichen zwischen der ersten Mahloberfläche 8 und der korrespondierenden stoffgemischbeaufschlagten Teilfläche 10 der zweiten Mahloberfläche 9 ausgebildet werden.

Fig. 5b zeigt eine ähnliche Ausführungsform eines Austrittselements 11 mit einer ersten Mahloberfläche 8 in der Untersicht, wobei die Messerreihen 26 eine jeweils durchgehende und demnach geschlossene Mahlkante aufweisen. Zudem ist in der gewählten Darstellung eine konzentrische Anordnung der, durch Nuten 29 voneinander beabstandeten, Messerreihen 26 ersichtlich.

Wie aus Fig. 5a und 5b sehr gut ersichtlich, kann durch die geeignete Konstruktion der ersten Mahloberfläche 8, insbesondere durch deren Geometrie und/oder Messeranordnung, eine Homogenisierung des Stoffgemischaustritts 6 entlang des Umfangs der ersten Mahloberfläche 8 erzielt werden. Der Stoffgemischaustritt 6 ist durch Bewegungspfeile angedeutet.

Fig. 5c stellt eine schematische Schnittdarstellung durch ein Austrittselement 11 eine die Austrittsöffnung 12 umgebende erste Mahloberfläche 8 sowie einen gekrümmten Behandlungskörper 7 dar. Die erste Mahloberfläche 8 ist zur Stoffgemisch 2 beaufschlagten Teilfläche 10 des Behandlungskörpers 7 bzw. der zweiten Mahloberfläche 9 im Wesentlichen formkomplementär ausgebildet. Dabei sind insbesondere konkave und konvexe Formen der erste Mahloberfläche 8 vorstellbar, wie besonders gut in Fig. 5c ersichtlich.

In Fig. 6 zeigt eine schematische Schnittdarstellung einer weiteren mögliche Ausführungsform eines Austrittselements 11, wobei das Austrittselement 11 einen rotierbaren Endabschnitt 14 aufweist. Dieser Endabschnitt 14 kann zur einfacheren Wartung einfach auswechselbar ausgebildet sein. Ebenso kann ein derartiger Endabschnitt 14 **"passiv" oder "aktiv" rotierbar sein, wobei die "aktive" Rotation** mittels einer nicht dargestellten Rotationsvorrichtung vorgenommen werden kann. Es ist aus Fig. 6 leicht nachvollziehbar, dass ein etwaiger Verschleiß der ersten Mahloberfläche 8, insbesondere in Bewegungsrichtung 23, durch die inkrementelle und/oder kontinuierliche Rotation des Endabschnitts 14 über den Umfang der ersten Mahloberfläche 8 homogenisiert werden kann.

Die in Fig. 5a bis 5c und Fig. 6 dargestellten Austrittselemente 11 sowie deren Diskussionen können erfindungsgemäß in die Beschreibung der Fig. 1b, 2, 3, 4 und 7 miteinbezogen werden. Ebenso sind deren Kombination im Rahmen der vorliegenden Erfindung und werden der Kürze halber nicht separat diskutiert, sondern auf die entsprechenden Diskussionen verwiesen.

In Fig. 7 ist eine schematische Übersichtsdarstellung der erfindungsgemäßen Vorrichtung 1 gezeigt. Dabei zwei Austrittselemente 11 relativ zum bewegbaren Behandlungskörper 7 angeordnet. Die Positionierung des jeweiligen Austrittselements 11 wird mittels einer Zustellvorrichtung 18 vorgenommen. Die Zufuhr des Stoffgemischs 2 erfolgt über eine Versorgungseinrichtung 19. Der als Scheibe 22 ausgebildete Behandlungskörper 7 wird von einer Antriebsvorrichtung 20 in eine Bewegungsrichtung 23 angetrieben.

Wie aus Fig. 7 ersichtlich, weist die Vorrichtung 1 ein Gehäuse 28 auf, welches in geöffnetem Zustand dargestellt ist. Das Gehäuse 28 dient in erster Linie dem Stofffang während der Behandlung und kann mittels einem oder mehrerer Dichtelemente 30 zumindest gegenüber der Antriebsvorrichtung 20 abgedichtet sein. Derartige Dichtelemente 30 sind beispielhaft auch in Fig. 3 ersichtlich und können berührend oder auch berührungslos ausgebildet sein. Das bearbeitete Stoffgemisch bzw. die bearbeiten Fasern 5 kann in einem Auffangbehälter 31 aufgenommen werden. Ebenso ist denkbar, dass die Versorgungseinrichtung 19 mit dem Auffangbehälter 31 verbunden ist, um ein Kreislaufprinzip zu verwirklichen.

Im Rahmen der vorliegenden Erfindung können die einzelnen Verfahrensschritte auch automatisiert und bevorzugt über eine zentrale, nicht dargestellte, Anlagensteuerung gesteuert werden. Überdies wird die Bedienung an einem Bedienpaneel oder auch Touchscreen zur Überwachung und Steuerung der Vorrichtung 1 angedacht.

Die Einstellung einer vorgebbaren Verteilung an Faserlängen und/oder Faserquerschnitten und/oder deren Verteilung kann somit vom Benutzer vorgegeben werden und mittels einer Anlagensteuerung geregelt werden. Der mehrmalige Durchlauf von zumindest Teilen des bearbeiteten Stoffgemischs 5 kann ebenfalls zur Einstellung der Homogenität und/oder Qualität der bearbeiteten Fasern 5 verwendet werden.

Die Stoffdichte des Stoffgemischs 2 kann auf die Qualität des bearbeiteten Stoffgemischs 5 einen Einfluss haben. Mit der vorliegenden Vorrichtung 1 und dem korrespondierenden Verfahren können Suspensionen, also Stoffgemische 2, mit einem Faseranteil von 0,1 bis etwa 35 Vol.%, bevorzugt 1 bis etwa 20 Vol.%, sicher und einfach verarbeitet werden. Stoffdichten bis zu 50 Vol.% und darüber sind ebenso vorstellbar. Hierbei kann es unter Umständen erforderlich sein, dass der Fachmann auf geeignete Versorgungseinrichtungen 19 zurückgreift, welche in der Lage sind Stoffgemische 2 mit derart hohen Stoffdichten zu fördern. Hierzu sind z.B. Zuführschneckenanordnungen besonders geeignet.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

| | | | |
|---|---|---|---|
| 1 | Vorrichtung | 29 | Nut |
| 2 | Stoffgemisch | 30 | Dichtelement |
| 3 | Faser | 31 | Auffangbehälter |
| 4 | Zellstoff | 32 | Stoffgemischzufuhr |
| 5 | bearbeitetes Stoffgemisch/ Faser | 33 | Druckgehäuse |
| | | 34 | Rotor |
| 6 | Stoffgemischaustritt | 35 | Stator |
| 7 | Behandlungskörper | 36 | stoffgemischbeaufschlagte Oberfläche/Nebenfläche gem. Stand der Technik |
| 8 | erste Mahloberfläche | | |
| 9 | zweite Mahloberfläche | | |
| 10 | stoffgemischbeaufschlagte Teilfläche | 37 | Stoffgemischaustrittsöffnung |
| 11 | Austrittselement | | |
| 12 | Austrittsöffnung | | |
| 13 | dritte Mahloberfläche | | |
| 14 | Endabschnitt | | |
| 15 | Prozessdruck | | |
| 16 | Behandlungszone | | |
| 17 | Arbeitsabstand | | |
| 18 | Zustellvorrichtung | | |
| 19 | Versorgungseinrichtung | | |
| 20 | Antriebsvorrichtung | | |
| 21 | Austrittselementachse | | |
| 22 | Scheibe | | |
| 23 | Bewegungsrichtung | | |
| 24 | Rotationsachse | | |
| 25 | Radialabstand | | |
| 26 | Messerreihe | | |
| 27 | Relativgeschwindigkeit | | |
| 28 | Gehäuse | | |

## Patentansprüche

1. Vorrichtung (1), insbesondere Refiner, zur Behandlung von Fasern (3) eines Fasern (3) beinhaltenden Stoffgemischs (2), umfassend:
- zumindest ein Austrittselement (11) zum Durchlass des faserhaltigen Stoffgemisches (2) mit einer Austrittsöffnung (12) und zumindest einer die Austrittsöffnung (12) in eine Umfangsrichtung umgebend angeordneten ersten Mahloberfläche (8),
- zumindest eine Zustellvorrichtung (18) zur Positionierung des Austrittselements (11); wobei
zur Behandlung des Fasern (3) beinhaltenden Stoffgemischs (2) ein in eine Bewegungsrichtung (23) bewegbarer Behandlungskörper (7) mit einer zweiten Mahloberfläche (9) relativ zum zumindest einen Austrittselement (11) gegenüberliegend angeordnet ist, wobei bei Durchlass des Fasern (3) beinhaltenden Stoffgemisches (2) durch das Austrittselement (11) eine spaltförmige Behandlungszone (16) zwischen der ersten Mahloberfläche (8) des Austrittselements (11) und einer stoffgemischbeaufschlagten Teilfläche (10) der zweiten Mahloberfläche (9) des bewegbaren Behandlungskörpers (7) ausgebildet ist, wobei
zumindest die erste Mahloberfläche (8) zumindest eine, bevorzugt mehr als zwei, Messerreihe/n (26) aufweist,
**dadurch gekennzeichnet, dass**
die zumindest eine Messerreihe (26) der ersten Mahloberfläche (8) eine geschlossene Mahlkante aufweist.

2. Vorrichtung (1) nach Anspruch 1, **dadurch gekennzeichnet, dass**
der bewegbare Behandlungskörper (7) in die Bewegungsrichtung (23) im Wesentlichen seitlich, bevorzugt normal, zu einer Austrittselementachse (21) des Austrittselements (11) mittels einer Antriebsvorrichtung (20) antreibbar ausgebildet ist.

3. Vorrichtung (1) nach Anspruch 1 oder 2, **dadurch gekennzeichnet, dass**
der bewegbare Behandlungskörper (7) rotationssymmetrisch, etwa als eine Scheibe (22), Zylinder, Kegel, oder als bandförmig, wie etwa eine Kette oder Band, ausgebildet ist.

4. Vorrichtung (1) nach einem der vorhergehenden Ansprüche, **dadurch gekennzeichnet, dass**
der bewegbare Behandlungskörper (7) als Scheibe (22) seitlich, bevorzugt normal, zum Austrittselement (11) rotierbar ausgebildet ist.

5. Vorrichtung (1) nach Anspruch 4, **dadurch gekennzeichnet, dass**
die zumindest eine Zustellvorrichtung (18) parallel zu einer Rotationsachse (24) der Scheibe (22), zur Einstellung eines vorgebbaren Radialabstandes (25) der Austrittselementachse (21) von der Rotationsachse (24), beweglich ausgebildet ist.

6. Vorrichtung (1) nach einem der vorhergehenden Ansprüche, **dadurch gekennzeichnet, dass**
die erste Mahloberfläche (8) eine in Bewegungsrichtung (23) größere Längserstreckung aufweist als quer dazu.

7. Vorrichtung (1) nach einem der Ansprüche 1 bis 5, **dadurch gekennzeichnet, dass**
die zumindest eine, bevorzugt mehr als zwei, Messerreihe/n (26) der ersten Mahloberfläche (8) konzentrisch zur Austrittsöffnung (12) angeordnet sind.

8. Vorrichtung (1) nach einem der vorhergehenden Ansprüche, **dadurch gekennzeichnet, dass** die erste Mahloberfläche (8) zur stoffgemischbeaufschlagten Teilfläche (10) der zweiten Mahloberfläche (9) des bewegbaren Behandlungskörpers (7) im Wesentlichen formkomplementär ausgebildet ist.

9. Vorrichtung (1) nach einem der Ansprüche 1 bis 7, **dadurch gekennzeichnet, dass**
ein Endabschnitt (14) zumindest eines Austrittselements (11) zumindest teilweise um die Austrittselementachse (21) rotierbar, bevorzugt antreibbar rotierbar, ausgebildet ist.

10. Vorrichtung (1) nach einem der vorhergehenden Ansprüche, **dadurch gekennzeichnet, dass**
die zumindest eine Zustellvorrichtung (18) zur Einstellung eines Arbeitsabstandes (17) zwischen der ersten Mahloberfläche (8) des zumindest einen Austrittselements (11) und der stoffgemischbeaufschlagten Teilfläche (10) der zweiten Mahloberfläche (9) des bewegbaren Behandlungskörpers (7) ausrichtbar ausgebildet ist, und/oder,
dass zumindest zwei Austrittselemente (11) symmetrisch in Umfangsrichtung und/oder Radialrichtung relativ zum bewegbaren Behandlungskörper (7) angeordnet sind, und/oder,
dass zumindest ein zweites Austrittselement (11) einem ersten Austrittselement (11) im Wesentlichen gegenüberliegend angeordnet ist, wobei das erste Austrittselement (11) einer zweiten Mahloberfläche (9) des bewegbaren Behandlungskörpers (7) und das jeweils korrespondierende zweite Austrittselement (11) einer, der zweiten Mahloberfläche (9) gegenüberliegenden, dritten Mahloberfläche (13) zugeordnet ist, und/oder
dass entlang der Bewegungsrichtung (23) und/oder im Wesentlichen normal zur Bewegungsrichtung (23) des bewegbaren Behandlungskörpers (7) zumindest zwei Austrittselemente (11) angeordnet sind, und/oder
dass zumindest der bewegbare Behandlungskörper (7) von der Antriebsvorrichtung (20) mittels einem berührenden und/oder berührungslosen Dichtelement (30), bevorzugt einer wartungsfreien Labyrinthdichtung, von einem Gehäuse (28) abgedichtet angeordnet ist.

11. Verfahren zur Behandlung von Fasern (3) eines Faser (3) beinhaltenden Stoffgemischs (2), umfassend die Verfahrensschritte:
- Bereitstellung eines Refiners (1) nach einem der Ansprüche 1 bis 10;
- Bereitstellung eines Stoffgemischs (2), welches zumindest ein eine Flüssigkomponente, bevorzugt Wasser, und Fasern (3), bevorzugt Zellstoff (4) umfasst;
- Bewegen eines bewegbaren Behandlungskörpers (7) relativ zum zumindest einen Austrittselement (11) mit einer vorgebbaren Relativgeschwindigkeit (27);
- Durchpressen des Fasern (3) beinhaltenden Stoffgemischs (2) durch das zumindest eine Austrittselement (11) mit einem vorgebbaren Prozessdruck (15);
- Behandlung des Stoffgemischs (2) durch Ausbilden einer spaltförmigen Behandlungszone (16) zur Behandlung von Fasern (3) zwischen einer ersten Mahloberfläche (8) des zumindest einen Austrittselements (11) und einer stoffgemischbeaufschlagten Teilfläche (10) einer zweiten Mahloberfläche (9) des bewegbaren Behandlungskörpers (7) durch Positionieren des Austrittselements (11) relativ zum bewegbaren Behandlungskörper (7).

12. Verfahren nach Anspruch 11, wobei
der bewegbare Behandlungskörper (7) in eine Bewegungsrichtung (23) im Wesentlichen seitlich, bevorzugt normal, zu einer Austrittselementachse (21) des Austrittselements (11) mittels einer Antriebsvorrichtung (20) bewegt wird.

13. Verfahren nach einem der Ansprüche 11 oder 12, wobei die Relativgeschwindigkeit (27) des bewegten Behandlungskörpers (7) zur Einstellung einer in der spaltförmigen Behandlungszone (16) ausgebildeten Mahlintensität, geregelt wird, und/oder
wobei ein Arbeitsabstand (17) zwischen der ersten Mahloberfläche (B) des zumindest einen Austrittselements (11) und der korrespondierenden stoffgemischbeaufschlagten Teilfläche (10) der zweiten Mahloberfläche (9) zur Einstellung von Druckkräften auf den bewegbaren Behandlungskörper (7) mittels zumindest einer Zustellvorrichtung (18) geregelt wird, und/oder
wobei vor der Bereitstellung des Stoffgemischs (2) eine chemische und/oder enzymatische und/oder mechanische Vorbehandlung des Stoffgemischs (2) vorgenommen wird.

14. Verfahren nach einem der Ansprüche 11 bis 13, wobei
zumindest die Verfahrensschritte des Durchpressens und Behandelns mit zumindest Teilen des bearbeiteten Stoffgemischs (2) wiederholt werden.

15. Verfahren nach einem der Ansprüche 11 bis 14, wobei
während des Durchpressens ein Endabschnitt (14) des Austrittselements (11) um die Austrittselementachse (21) rotiert wird.

## Claims

1. A device (1), in particular a refiner, for treating fibres (3) of a mixture of substances (2) containing fibres (3), comprising:
- at least one outlet element (11) for the passage of the mixture of substances (2) containing fibres (3) with an outlet opening (12) and at least one first refining surface (8) arranged around the outlet opening (12) in a circumferential direction,
- at least one feeding device (18) for positioning the outlet element (11); wherein,
- for treating the mixture of substances (2) containing fibres (3), a treatment body (7) movable in a direction of movement (23) and having a second refining surface (9) is arranged opposite relative to the at least one outlet element (11), wherein, during the passage of the mixture of substances (2) containing fibres (3) through the outlet element (11), a gap-type treatment zone (16) is formed between the first refining surface (8) of the outlet element (11) and a sub-surface (10) of the second refining surface (9) of the movable treatment body (7), to which the mixture of substances is applied, wherein
at least the first refining surface (8) has at least one, preferably more than two, row(s) of blades (26),
**characterised in that**
the at least one row of blades (26) of the first refining surface (8) has a closed refining edge.

2. The device (1) according to claim 1, **characterised in that**
the movable treatment body (7) is designed such that it can be driven in a direction of movement (23) essentially laterally, preferably orthogonally, to an outlet element axis (21) of the outlet element (11) by means of a drive device (20).

3. The device (1) according to claim 1 or 2, **characterised in that**
the movable treatment body (7) is designed in a rotationally symmetrical manner, for example as a disc (22), cylinder, cone, or band shaped, such as a chain or a band.

4. The device (1) according to any one of the preceding claims, **characterised in that**
the movable treatment body (7) is designed as a disc (22) so as to be rotatable laterally, preferably orthogonally, towards the outlet element (11).

5. The device (1) according to claim 4, **characterised in that**
the at least one feeding device (18) is designed so as to be movable parallel to an axis of rotation (24) of the disc (22) in order to set a pre-definable radial distance (25) of the outlet element axis (21) from the axis of rotation (24).

6. The device (1) according to any one of the preceding claims, **characterised in that**
the first refining surface (8) has a larger longitudinal extension in the direction of movement (23) than transversely thereto.

7. The device (1) according to any one of claims 1 to 5, **characterised in that**
the at least one, preferably more than two, row(s) of blades (26) of the first refining surface (8) are arranged concentrically to the outlet opening (12).

8. The device (1) according to any one of the preceding claims, **characterised in that**
the first refining surface (8) is substantially complementary in shape to the sub-surface (10) of the second refining surface (9) of the movable treatment body (7), to which the mixture of substances is applied.

9. The device (1) according to any one of claims 1 to 7, **characterised in that**
an end section (14) of at least one outlet element (11) is designed to be at least partly rotatable around the outlet element axis (21), preferably rotatable in a drivable manner.

10. The device (1) according to any one of the preceding claims, **characterised in that**
the at least one feeding device (18) is designed such that it can be aligned in order to set a working distance (17) between the first refining surface (8) of the at least one outlet element (11) and the sub-surface (10) of the second refining surface (9) of the movable treatment body (7), to which the mixture of substances is applied, and/or
that at least two outlet elements (11) are arranged symmetrically in the circumferential direction and/or radial direction in relation to the movable treatment body (7), and/or
that at least a second outlet element (11) is arranged substantially opposite to a first outlet element (11), wherein the first outlet element (11) is assigned to a second refining surface (9) of the movable treatment body (7) and the respectively corresponding second outlet element (11) is assigned to a third refining surface (13) opposite to the second refining surface (9), and/or
that at least two outlet elements (11) are arranged along the direction of movement (23) and/or essentially orthogonally to the direction of movement (23) of the movable treatment body (7), and/or
that at least the movable treatment body (7) of the drive device (20) is arranged in a sealed manner from a housing (28) by means of a contacting and/or non-contacting sealing element (30), preferably a maintenance-free labyrinth seal.

11. A method for treating fibres (3) of a mixture of substances (2) containing fibres (3), comprising the following method steps:
- provision of a refiner (1) according to any one of claims 1 to 10;
- provision of a mixture of substances (2), which comprises at least one liquid component, preferably water, and fibres (3), preferably pulp (4);
- moving of a movable treatment body (7) relative to the at least one outlet element (11) at a pre-definable relative speed (27);
- pressing the mixture of substances (2) containing fibres (3) through the at least one outlet element (11) with a pre-definable process pressure (15);
- treatment of the mixture of substances (2) by forming a gap-type treatment zone (16) for the treatment of fibres (3) between a first refining surface (8) of the at least one outlet element (11) and a sub-surface (10) of a second refining surface (9) of the movable treatment body (7), to which the mixture of substances is applied, by positioning the outlet element (11) relative to the movable treatment body (7).

12. The method according to claim 11, wherein
the movable treatment body (7) is moved in a direction of movement (23) substantially laterally, preferably orthogonally, towards an outlet element axis (21) of the outlet element (11) by means of a drive device (20).

13. The method according to any one of claims 11 and 12, wherein
the relative speed (27) of the moved treatment body (7) is regulated in order to set a refining intensity formed in the gap-type treatment zone (16), and/or wherein
a working distance (17) is regulated between the first refining surface (B) of the at least one outlet element (11) and the corresponding sub-surface (10) of the second refining surface (9), to which the mixture of substances is applied, in order to set pressure forces on the movable treatment body (7) by means of at least one feeding device (18), and/or wherein
a chemical and/or enzymatic and/or mechanical pretreatment of the mixture of substances (2) is carried out prior to the provision of the mixture of substances (2).

14. The method according to any one of claims 11 to 13, wherein
at least the method steps of the pressing-through and treatment are repeated with at least parts of the processed mixture of substances (2).

15. The method according to any one of claims 11 to 14, wherein,
during the pressing-through, an end section (14) of the outlet element (11) is rotated about the outlet element axis (21).

## Revendications

1. Dispositif (1), en particulier raffineur, pour le traitement de fibres (3) d'un mélange de matières (2) contenant des fibres (3), comprenant :
- au moins un élément de sortie (11) pour le passage du mélange de matières (2) contenant des fibres, ayant une ouverture de sortie (12) et au moins une première surface de raffinage (8) disposée autour de l'ouverture de sortie (12) dans une direction circonférentielle,
- au moins un dispositif d'avance (18) pour le positionnement de l'élément de sortie (11) ; dans lequel,
pour traiter le mélange de matières (2) contenant des fibres (3), un corps de traitement (7) mobile dans une direction de déplacement (23) et comportant une deuxième surface de raffinage (9) est disposé en face dudit au moins un élément de sortie (11), le mélange de matières (2) contenant des fibres (3) passant à travers l'élément de sortie (11) formant une zone de traitement en forme de fente (16) entre la première surface de raffinage (8) de l'élément de sortie (11) et une surface partielle (10) de la deuxième surface de raffinage (9) du corps de traitement mobile (7) à laquelle est appliqué le mélange de matières,
au moins la première surface de raffinage (8) comporte au moins une, de préférence plus de deux, rangées de couteaux (26),
**caractérisé en ce que**
l'au moins une rangée de couteaux (26) de la première surface de raffinage (8) présente un bord de raffinage fermé.

2. Dispositif (1) selon la revendication 1, **caractérisé en ce que**
le corps de traitement mobile (7) est conçu pour être entraîné dans la direction de déplacement (23) essentiellement latéralement, de préférence normalement, par rapport à un axe d'élément de sortie (21) de l'élément de sortie (11) au moyen d'un dispositif d'entraînement (20).

3. Dispositif (1) selon la revendication 1 ou 2, **caractérisé en ce que**
le corps de traitement mobile (7) est conçu de manière symétrique en rotation, par exemple sous la forme d'un disque (22), d'un cylindre, d'un cône ou d'une bande, comme une chaîne ou un ruban.

4. Dispositif (1) selon l'une des revendications précédentes, **caractérisé en ce que**
le corps de traitement mobile (7) est conçu sous la forme d'un disque (22) pouvant tourner latéralement, de préférence normalement, par rapport à l'élément de sortie (11).

5. Dispositif (1) selon la revendication 4, **caractérisé en ce que**
l'au moins un dispositif d'avance (18) est conçu de manière mobile parallèlement à un axe de rotation (24) du disque (22) afin de régler une distance radiale prédéfinie (25) entre l'axe de l'élément de sortie (21) et l'axe de rotation (24).

6. Dispositif (1) selon l'une des revendications précédentes, **caractérisé en ce que**
la première surface de raffinage (8) présente une extension longitudinale plus grande dans la direction de déplacement (23) que transversalement à celle-ci.

7. Dispositif (1) selon l'une des revendications 1 à 5, **caractérisé en ce que** l'au moins une, de préférence plus de deux, rangées de couteaux (26) de la première surface de raffinage (8) sont disposées de manière concentrique par rapport à l'ouverture de sortie (12).

8. Dispositif (1) selon l'une des revendications précédentes, **caractérisé en ce que** la première surface de raffinage (8) est conçue de manière essentiellement complémentaire à la surface partielle (10) de la deuxième surface de raffinage (9) du corps de traitement mobile (7) à laquelle est appliqué le mélange de matières.

9. Dispositif (1) selon l'une des revendications 1 à 7, **caractérisé en ce qu'**
une partie d'extrémité (14) d'au moins un élément de sortie (11) est conçue de manière à pouvoir tourner au moins partiellement autour de l'axe (21) de l'élément de sortie, de préférence de manière à pouvoir être entraînée en rotation.

10. Dispositif (1) selon l'une des revendications précédentes, **caractérisé en ce que**
l'au moins un dispositif d'avance (18) pour régler une distance de travail (17) entre la première surface de raffinage (8) de l'au moins un élément de sortie (11) et la surface partielle (10) de la deuxième surface de raffinage (9) du corps de traitement mobile (7) à laquelle est appliqué le mélange de matières, et/ou
**en ce qu'**au moins deux éléments de sortie (11) sont disposés symétriquement dans le sens circonférentiel et/ou dans le sens radial par rapport au corps de traitement mobile (7), et/ou
qu'au moins un deuxième élément de sortie (11) est disposé essentiellement en face d'un premier élément de sortie (11), le premier élément de sortie (11) étant associé à une deuxième surface de raffinage (9) du corps de traitement mobile (7) et le deuxième élément de sortie (11) correspondant respectivement étant associé à une troisième surface de raffinage (13) opposée à la deuxième surface de raffinage (9), et/ou
qu'au moins deux éléments de sortie (11) sont disposés le long de la direction de déplacement (23) et/ou sensiblement perpendiculairement à la direction de déplacement (23) du corps de traitement mobile (7), et/ou
qu'au moins le corps de traitement mobile (7) du dispositif d'entraînement (20) est disposé de manière étanche par rapport à un boîtier (28) au moyen d'un élément d'étanchéité (30) avec contact et/ou sans contact, de préférence un joint labyrinthe sans entretien.

11. Procédé de traitement de fibres (3) d'un mélange de matières (2) contenant des fibres (3), comprenant les étapes suivantes :
- la mise à disposition d'un raffineur (1) selon l'une des revendications 1 à 10 ;
- la mise à disposition d'un mélange de matières (2) qui comprend au moins un composant liquide, de préférence de l'eau, et des fibres (3), de préférence de la cellulose (4) ;
- le déplacement d'un corps de traitement mobile (7) par rapport à au moins un élément de sortie (11) à une vitesse relative prédéfinissable (27) ;
- le pressage du mélange de matières (2) contenant des fibres (3) à travers l'au moins un élément de sortie (11) avec une pression de traitement (15) prédéfinissable ;
- le traitement du mélange de matières (2) par formation d'une zone de traitement en forme de fente (16) pour le traitement de fibres (3) entre une première surface de raffinage (8) dudit au moins un élément de sortie (11) et une surface partielle (10) d'une deuxième surface de raffinage (9) du corps de traitement mobile (7) à laquelle est appliqué le mélange de matières, en positionnant l'élément de sortie (11) par rapport au corps de traitement mobile (7).

12. Procédé selon la revendication 11, dans lequel
le corps de traitement mobile (7) est déplacé dans une direction de déplacement (23) sensiblement latérale, de préférence normale, par rapport à un axe (21) de l'élément de sortie (11) au moyen d'un dispositif d'entraînement (20).

13. Procédé selon l'une des revendications 11 ou 12, dans lequel
la vitesse relative (27) du corps de traitement déplacé (7) est régulée pour ajuster une intensité de raffinage formée dans la zone de traitement en forme de fente (16), et/ou dans lequel
une distance de travail (17) entre la première surface de raffinage (B) de l'au moins un élément de sortie (11) et la surface partielle correspondante (10) de la deuxième surface de raffinage (9) à laquelle est appliqué le mélange de matières est régulée au moyen d'au moins un dispositif d'avance (18) afin de régler des forces de pression exercées sur le corps de traitement mobile (7), et/ou dans lequel,
avant la mise à disposition du mélange de matières (2), un prétrai-tement chimique et/ou enzymatique et/ou mécanique du mélange de matières (2) est effectué.

14. Procédé selon l'une des revendications 11 à 13, dans lequel
au moins les étapes du procédé du pressage à travers et du traitement avec au moins des parties du mélange de matières traité (2) sont répétées.

15. Procédé selon l'une des revendications 11 à 14, dans lequel
pendant le pressage à travers, une partie d'extrémité (14) de l'élément de sortie (11) est mise en rotation autour de l'axe (21) de l'élément de sortie.
